# EUROPEAN PATENT SPECIFICATION

(11) **EP 2 213 754 B1**
(45) Date of publication and mention of the grant of the patent: **04.04.2018**
(21) Application number: 09005371.1
(22) Date of filing: 15.04.2009
(51) Int. Cl.: C21D 1/42, C21D 9/60, C21D 9/62, C21D 9/63, C21D 11/00

(54) **Strip material treatment apparatus**
Streifenmaterialbehandlungsvorrichtung
Appareil de traitement de matériau de bande

(30) Priority: 13.01.2009 JP 2009004686
(43) Date of publication of application: 04.08.2010
(73) Proprietor: Chugai Ro Co., Ltd., Osaka 541-0046 (JP)
(72) Inventor: Shirono, Hiroshi, Osaka 541-0046 (JP)
(74) Representative: Glawe, Delfs, Moll

(56) References cited:
- EP-A1- 0 728 847
- JP-A- 7 252 539
- JP-A- 60 092 428
- JP-A- 60 096 728
- JP-A- 2007 003 099
- US-A- 4 270 959
- US-A- 5 472 528
- US-A- 5 616 295

## Description

### BACKGROUND OF THE INVENTION

The present invention relates to a strip material treatment apparatus.

Strip material treatment apparatuses using induction heating are described in JP 2005-15873 A and JP H10-180181 A. Induction heating is a direct-heating system that generates heat in the strip material itself and has high temperature control response since a heating value linearly changes in accordance with an input power. Moreover, induction heating has a merit that the treatment apparatus can be reduced in size since a thermal dose per unit area can be increased.

However, since induction heating causes a nonuniformity in the heating value depending on the shape and arrangement of a heating coil, there is a defect that a temperature distribution in the strip material becomes nonuniform in the widthwise direction. Although trials for devising the shape and arrangement of a heating coil are performed in order to reduce the temperature variation in the widthwise direction, they are insufficient for advanced heat treatment of a strip material.

For the above reasons, when a demand for the uniformity of heating is high, induction heating is only able to bear a part of the quantity of heat given to the strip material even if induction heating is used for the heat treatment of a strip material. There is a high degree of dependence on indirect heating, such as a radiation system and forced convection system, capable of performing uniform heating, and dissatisfaction remains in reducing the size of the apparatus.
JP 60 092428 A discloses an induction heating apparatus provided with induction heaters and jet nozzles. JP 07 252539 A discloses an induction heating apparatus provided with induction heating units and a circulation duct having a heater, a blower and floating nozzles, wherein the blowing pressure of the floating nozzles is such that it can support the lower surface of a metal strip in a floating state and the blowing temperature is such that the temperature of the metal strip heated in the induction heating apparatus can be maintained. JP 60 096728 A discloses a heat treatment furnace provided with a heating zone including induction heating coils, a soaking zone including nozzles and a cooling zone including further nozzles.

### SUMMARY OF THE INVENTION

In view of the above problems, it becomes possible to reduce the size of the treatment apparatus by increasing the rate of contribution of induction heating if a device for compensating for a temperature variation caused by induction heating in the widthwise direction of the strip material.

Therefore, an object of the present invention is to provide a strip material treatment apparatus capable of uniforming the temperature of the strip material in the widthwise direction.

In order to solve the above problems, a strip material treatment apparatus of the invention has the features defined in claim 1.

According to the above construction, the thermal dose to the strip material can be controlled by changing the conditions of the hot air blown in the widthwise direction of the strip material. Therefore, the temperature can be uniformed by correcting the temperature variation in the widthwise direction of the strip material.

Moreover, in the strip material treatment apparatus of the invention, the hot air blowing nozzles may be aligned in a conveyance direction of the strip material.

According to the above construction, the thermal dose can be increased by making hot air blowing multistage, and even a strip material of a large temperature nonuniformity can be uniformed in temperature.

Moreover, in the strip material treatment apparatus of the invention, the hot air blowing nozzles may be constructed of segment ducts obtained by segmenting the circulation duct in the widthwise direction of the strip material at the portion downstream of the heater, and the air flow quantity controller may adjust a degree of opening of a damper provided at each of the segment ducts.

According to the above construction, the hot air blowing nozzles can share one heater. Moreover, since the air flow quantity controller adjusts the degree of opening of each damper, it is not needed to control currents individually for multiple heaters.

Moreover, in the strip material treatment apparatus of the invention, the hot air blowing nozzles may hold the strip material by a wind pressure by blowing hot air against both surfaces of the strip material.

According to the above construction, since a function to guide the strip material is provided, a guide mechanism such as a guide roller is unnecessary.

According to the indirect heating chamber, a variation in time during which a treatment temperature is maintained can be eliminated as a result of further uniformly heating the strip material with temperature nonuniformity removed by indirect heating.

As described above, according to the invention, by controlling the thermal dose to the strip material by changing the conditions of hot air to be blown in the widthwise direction of the strip material, the temperature can be uniformed by correcting the temperature variation in the widthwise direction of the strip material.

### BRIEF DESCRIPTION OF THE DRAWINGS

These and other objects and features of the present invention will become apparent from the following description taken in conjunction with the preferred embodiments thereof with reference to the accompanying drawings, in which:
Fig. 1 is a schematic view of a strip material treatment apparatus according to a first embodiment of the invention;
Fig. 2 is a configuration diagram of an induction heating coil and a temperature regulating pressure pad of the strip material treatment apparatus of Fig. 1;
Fig. 3 is a configuration diagram of the control of the temperature regulating pressure pad of Fig. 2;
Fig. 4 is a temperature distribution chart that illustrates temperature compensation by the temperature regulating pressure pad of Fig. 2; and
Fig. 5 is a schematic view of a strip material treatment apparatus according to a second embodiment of the invention.

### DETAILED DESCRIPTION OF THE PREFERRED EMBODIMENTS

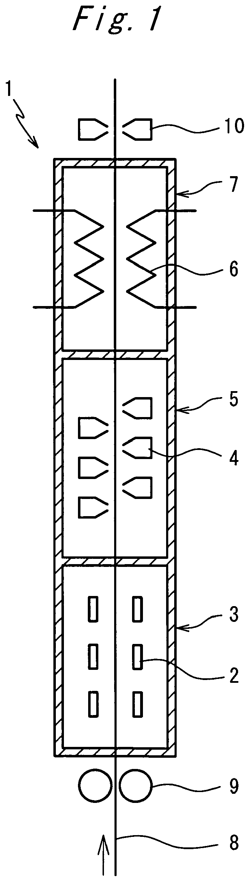

Fig. 1 shows the outline of a strip material treatment apparatus 1 according to the first embodiment of the invention. The strip material treatment apparatus 1 includes an induction heating chamber 3 that has an induction heating coil 2 of an output of 3.0 MW, a temperature variation compensating chamber 5 that has a temperature regulating pressure pad 4 of the invention, and an indirect heating chamber 7 that has a resistance heating element 6 of an output of 0.5 MW. A strip material 8 is guided by guide rollers 9, fed to the induction heating chamber 3, put through the temperature variation compensating chamber 5, heated up to a final target temperature in the indirect heating chamber 7, guided by a pressure pad 10 and unloaded to the next step.

The strip material 8 made of, for example, stainless steel of a width of 1250 mm and a thickness of 0.3 mm at a normal temperature is fed to the strip material treatment apparatus 1 at a velocity of 100 m/min. The strip material 8 is heated to about 630°C in the induction heating chamber 3, heated to about 640°C in the temperature variation compensating chamber 5 and heated up to 700°C of the final target temperature in the indirect heating chamber 7.

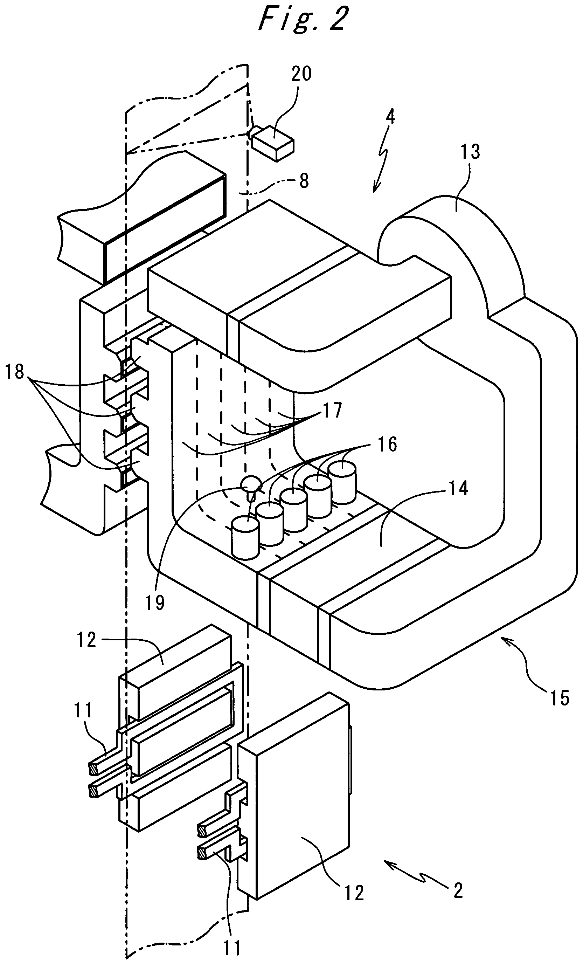

Fig. 2 shows the details of the temperature regulating pressure pad 4 and the induction heating coil 2. The induction heating coil 2 has conductors 11 arranged symmetrically on the front and the back sides of the strip material 8 and a plurality of heating cores 12 that guide magnetic fields generated by the conductors 11 and make the magnetic fields intersect the strip material 8.

The temperature regulating pressure pad 4 has a blower 13 of a maximum airflow quantity of 700 M³/min and a heater 14 of an output of 100,000 kcal/h (116 kW) on the front and the back sides of the strip material 8 and includes a circulation duct 15 that circulates air in the temperature variation compensating chamber 5 while heating the air. The circulation duct 15 is segmented into five segments in the widthwise direction by partition plates in downstream of the heater 14, constituting five segment ducts 17 each of which has a damper 16.

The segment ducts 17 extend along the strip material 8 and have three nozzles 18 that blow hot air against the strip material 8. The nozzles 18 of the segment ducts 17 are arranged in rows in the widthwise direction of the strip material 8 (hot air blowing means). The temperature regulating pressure pad 4 also plays the role of holding the strip material 8 by a wind pressure by blowing hot air against the strip material 8 between the induction heating chamber 3 and the indirect heating chamber 7 and preventing the shake of the strip material 8.

Moreover, the temperature regulating pressure pad 4 has a temperature sensor 19 to measure the temperature of the hot air that passes through the inside of the segment duct 17 located at the center. Moreover, a scanning pyrometer 20 (temperature measuring means) that scans and detects the temperature distribution in the widthwise direction of the strip material 8 against which the hot air is blown from the nozzles 18 by means of infrared rays is placed in downstream of the temperature regulating pressure pad 4.

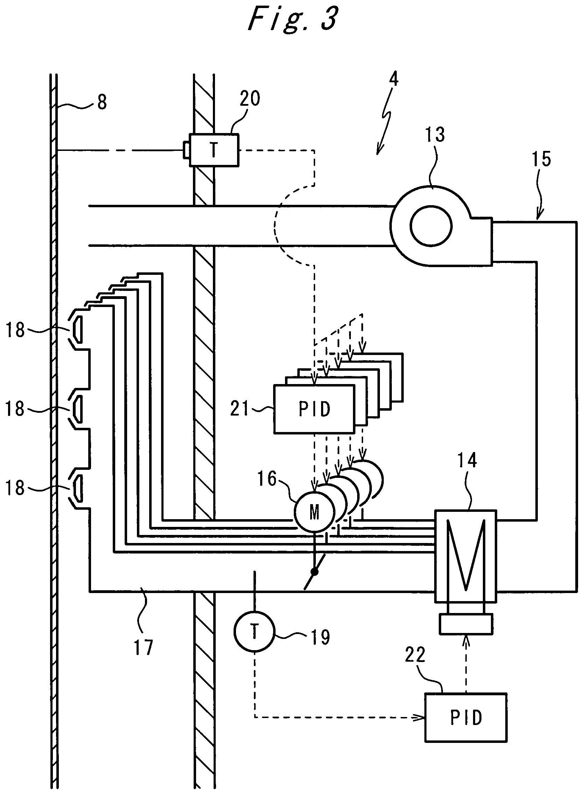

Fig. 3 shows a configuration with respect to the control in the temperature regulating pressure pad 4. The temperature regulating pressure pad 4 has five airflow quantity controllers 21 (hot air regulating means) each of which extracts a temperature in a position just opposite to the center of the nozzle 18 of each segment duct 17 from the temperature distribution of the strip material 8 detected by the scanning pyrometer 20 and performs PID control of the airflow quantity of each segment duct 17 by adjusting the degree of opening of each damper 16 so that each extracted temperature becomes a common target temperature. Although the front side of the strip material 8 is shown in the figure, the airflow quantity controllers 21 also adjust the dampers 16 located in the corresponding positions on the back side of the strip material 8 to the same degree of opening as that of the front side.

Moreover, the temperature regulating pressure pad 4 has a temperature controller 22 that performs PID control of the output of the heater 14 so that the temperature of the hot air detected by the temperature sensor 19 becomes a predetermined temperature (e.g., 690°C). Since the heater 14 is common, the temperature of the hot air that passes through each segment duct 17 is same.

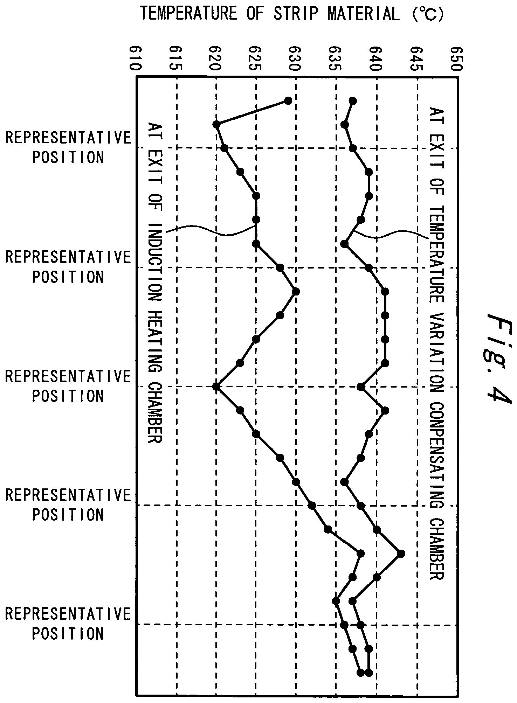

Fig. 4 shows a temperature distribution in the widthwise direction of the strip material 8 at the exit of the induction heating chamber 3 and a temperature distribution in the widthwise direction of the strip material 8 at the exit of the temperature variation compensating chamber 5. As illustrated, the strip material 8 heated in the induction heating chamber 3 has a temperature distribution in the widthwise direction having a variation of a maximum of 18°C and a standard deviation of 5.7°C ranging from a minimum of 620°C to a maximum of 638°C at 25 points of measurement. Such a variation is inevitable on the characteristics of induction heating of the direct-heating system.

Regarding the temperature regulating pressure pad 4 of the temperature variation compensating chamber 5, the degree of opening of each damper 16 is regulated by the airflow quantity controller 21 so that the temperature of the strip material 8 located in the representative position just opposite to the center of each segment duct 17 becomes 638°C as the target temperature. By this operation, the temperature distribution of the strip material 8 at the exit of temperature variation compensating chamber 5 has a small variation of a maximum of 7°C and a standard deviation of 1.8°C ranging from a minimum of 636°C to a maximum of 643°C.

As described above, the strip material 8 from which the temperature nonuniformity has been removed in the temperature variation compensating chamber 5 is further uniformly heated by the radiant heat of the resistance heating element 6 and raised in temperature up to 700°C of the final target temperature. By this operation, in the strip material treatment apparatus 1, nonuniformity in time to reaching to the final target temperature is also small, and the strip material 8 can be uniformly heat-treated.

Since the heating nonuniformity by the induction heating coil 2 can be compensated for by the temperature regulating pressure pad 4 in the present embodiment, it is possible to make the induction heating coil 2, which has a nonuniformity of heating, bear the greater part of the thermal dose necessary for heating the strip material 8 to the final target temperature, reducing the rate of load on the resistance heating element 6 that can perform uniform heating. The induction heating with the induction heating coil 2 can increase the thermal dose per unit area of the strip material 8 in comparison with the other indirect heating systems such as radiant heating with the resistance heating element 6 or a forced convection system, and therefore, the total length of the strip material treatment apparatus 1 can be shortened.

Since three rows of nozzles 18 of the temperature regulating pressure pad 4 are provided in the present embodiment, a temperature nonuniformity of a maximum of about 20°C of the strip material 8 can be compensated for. However, the number of rows of the nozzles 18 may be changed in accordance with the temperature variation to be compensated for. Moreover, if the temperature variation that should be compensated for is large, it is required to pay attention to the necessity of increasing the capacity of the heater 14.

Further, although the airflow quantity of hot air blown from the nozzles 18 against the strip material 8 is regulated by the dampers 16 in the present embodiment, it is acceptable to provide a heater for each segment duct 17 and to regulate the temperature of the hot air in each segment duct 17.

Moreover, it is acceptable to regulate only the airflow quantity or the temperature in the hot air blown against one surface of the strip material 8 according to the invention.

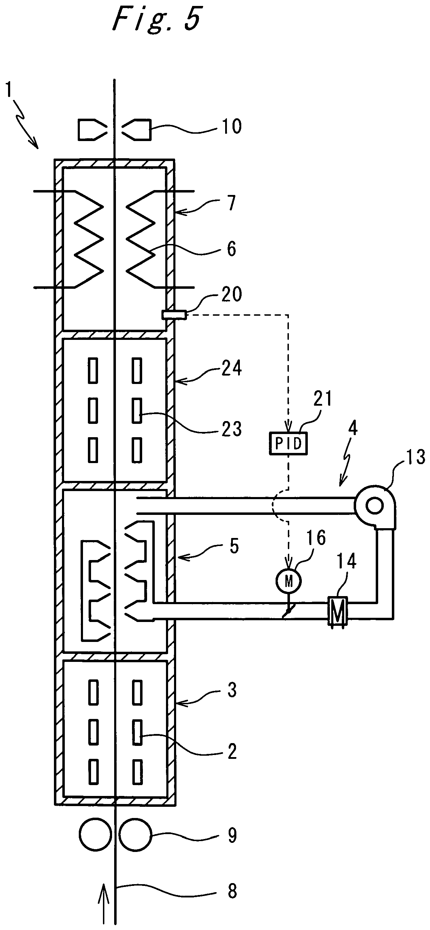

Next, Fig. 5 shows the construction of a strip material treatment apparatus 1 according to the second embodiment of the invention. In the present embodiment, the same components as those of the first embodiment are denoted by the same reference numerals, and no reiterative description is provided therefor.

The strip material treatment apparatus 1 of the present embodiment further includes a second induction heating chamber 24 that inductively heats the strip material 8 by an induction heating coil 23 between the temperature variation compensating chamber 5 and the indirect heating chamber 7. Moreover, the scanning pyrometer 20 of the present embodiment is provided to scan for detecting the temperature distribution of the strip material 8 in downstream of the induction heating coil 23.

The temperature regulating pressure pad 4 of the invention, which heats the strip material 8 by circulating hot air, therefore has its heat transfer efficiency lowered when used at a high temperature that exceeds 700°C. Therefore, by providing the second induction heating chamber 24 in downstream of the temperature regulating pressure pad 4 and preparatorily raising the temperature of a portion that has a small thermal doses by the induction heating coil 23 in the present embodiment, it is made possible to uniformly heat the strip material 8 to a high temperature of not lower than 1000°C.

In the present embodiment, the strip material 8 is heated up to about 630°C in average in the induction heating chamber 3 and heated up to about 640°C in average in the temperature variation compensating chamber 5. The whole body is heated up approximately to 1040°C in the second induction heating chamber 24 and uniformly heated up to 1100°C in average in the indirect heating chamber 7.

According to the invention, the hot air blowing means (nozzle 18 of the temperature regulating pressure pad 4) can be placed in an arbitrary position on the upstream side of the temperature measuring means (scanning pyrometer 20). That is, in the above embodiment, the temperature regulating pressure pad 4 may be placed on the upper stream side of the induction heating coil 2.

## Claims

1. A strip material treatment apparatus (1) having an induction heating chamber (3), **characterized in that** the strip material treatiment apparatus comprises:
a temperature variation compensating chamber (5) positioned downstream of the induction heating chamber;
an indirect heating chamber (7) for heating the strip material by indirect heating downstream of the temperature variation compensating chamber;
a circulation duct (15) having a blower (13) and a heater (14), the circulation duct (15) circulating air in the temperature variation compensating chamber (5) while heating the air;
a plurality of hot air blowing nozzles (18), provided at the end of the circulation duct (15), that are aligned in a widthwise direction of a strip material and heat the strip material by blowing hot air against the strip material;
temperature measuring means (20) that measures a temperature distribution in the widthwise direction of the strip material downstream of the hot air blowing nozzles (18);
an air flow quantity controller (21) that regulates an airflow quantity of hot air to be blown for every hot air blowing nozzle (18) so that a temperature variation in the widthwise direction of the strip material is reduced in accordance with a detection result of the temperature measuring means (20);
a temperature sensor (19) for measuring a temperature of the hot air to be blown by the air blowing nozzles (18); and
a temperature controller (22) for controlling the output of the heater so that the temperature of the hot air detected by the temperature sensor (19) becomes a predetermined temperature.

2. The strip material treatment apparatus as claimed in claim 1, wherein
the hot air blowing nozzles (18) are aligned in a conveyance direction of the strip material.

3. The strip material treatment apparatus as claimed in claim 1 or 2, wherein
the hot air blowing nozzles (18) are comprised of segment ducts obtained by segmenting the circulation duct in the widthwise direction of the strip material at the portion downstream of the heater, and
the air flow quantity controller (21) adjusts a degree of opening of a damper (16) provided for each of the segment ducts.

4. The strip material treatment apparatus as claimed in any one of claims 1 through 3, wherein
the hot air blowing nozzles (18) hold the strip material by a wind pressure by blowing hot air against both surfaces of the strip material.

## Patentansprüche

1. Behandlungsvorrichtung (1) für Streifenmaterial, die eine Induktionsheizkammer (3) aufweist, **dadurch gekennzeichnet, dass** die Behandlungsvorrichtung für Streifenmaterial umfasst:
eine Temperaturvariationskompensationskammer (5), die der Induktionsheizkammer nachgelagert angeordnet ist;
eine indirekte Heizkammer (7) zum Erhitzen des Streifenmaterials durch indirekte Erhitzung, der Temperaturvariationskompensationskammer nachgelagert, eine Zirkulationsleitung (15), die ein Gebläse (13) und eine Heizung (14) aufweist, wobei die Zirkulationsleitung (15) Luft in der Temperaturvariationskompensationskammer (5) umwälzt, während die Luft erhitzt wird;
eine Anzahl an Heißluftblasdüsen (18), die an dem Ende der Zirkulationsleitung (15) vorgesehen sind, die in einer Querrichtung eines Streifenmaterials ausgerichtet sind und das Streifenmaterial durch Blasen von heißer Luft gegen das Streifenmaterial erhitzen;
ein Temperaturmessmittel (20), das eine Temperaturverteilung in der Querrichtung des Streifenmaterials den Heißluftblasdüsen (18) nachgelagert misst;
eine Luftstrommengensteuerung (21), die eine Luftstrommenge an heißer Luft, die für jede Heißluftblasdüse (18) geblasen werden soll, reguliert, sodass eine Temperaturvariation in der Querrichtung des Streifenmaterials gemäß einem Erfassungsergebnis des Temperaturmessmittels (20) verringert wird;
einen Temperatursensor (19) zum Messen einer Temperatur der heißen Luft, die durch die Luftblasdüsen (18) geblasen werden soll; und
eine Temperatursteuerung (22) zum Steuern der Ausgangsleistung der Heizung, sodass die Temperatur der Heißluft, die durch den Temperatursensor (19) erfasst wird, eine vorgegebene Temperatur wird.

2. Behandlungsvorrichtung für Streifenmaterial gemäß Anspruch 1, wobei
die Heißluftblasdüsen (18) in einer Förderrichtung des Streifenmaterials ausgerichtet sind.

3. Behandlungsvorrichtung für Streifenmaterial gemäß Anspruch 1 oder 2, wobei
die Heißluftblasdüsen (18) aus Teilleitungen aufgebaut sind, die durch Teilen der Zirkulationsleitung in der Querrichtung des Streifenmaterials an dem der Heizung nachgelagerten Teil erhalten werden, und
die Luftstrommengensteuerung (21) einen Öffnungsgrad einer Klappe (16), die für jede der Teilleitungen bereitgestellt ist, einstellt.

4. Behandlungsvorrichtung für Streifenmaterial gemäß einem der Ansprüche 1 bis 3, wobei
die Heißluftblasdüsen (18) das Streifenmaterial durch einen Winddruck halten, indem Heißluft gegen beide Oberflächen des Streifenmaterials geblasen wird.

## Revendications

1. Appareil de traitement de matériau en bande (1) ayant une chambre de chauffage par induction (3), **caractérisé en ce que** l'appareil de traitement de matériau en bande comprend :
une chambre de compensation de variation de température (5) positionnée en aval de la chambre de chauffage par induction ;
une chambre de chauffage indirect (7) destinée à chauffer le matériau en bande par chauffage indirect en aval de la chambre de compensation de variation de température ;
un conduit de circulation (15) ayant une soufflante (13) et un réchauffeur (14), le conduit de circulation (15) faisant circuler de l'air dans la chambre de compensation de variation de température (5) tout en chauffant l'air ;
une pluralité de buses de soufflage d'air chaud (18), disposées à l'extrémité du conduit de circulation (15), qui sont alignées dans une direction de la largeur d'un matériau en bande et chauffent le matériau en bande en soufflant de l'air chaud sur le matériau en bande ;
un moyen de mesure de température (20) qui mesure une distribution de température dans la direction de la largeur du matériau en bande en aval des buses de soufflage d'air chaud (18) ;
un régulateur de débit d'air (21) qui régule un débit d'air chaud devant être soufflé pour chaque buse de soufflage d'air chaud (18) de telle sorte qu'une variation de température dans la direction de la largeur du matériau en bande est réduite en fonction d'un résultat de détection du moyen de mesure de température (20) ;
une sonde de température (19) destinée à mesurer une température de l'air chaud devant être soufflé par les buses de soufflage d'air (18) ; et
un régulateur de température (22) destiné à réguler la sortie du réchauffeur de telle sorte que la température de l'air chaud détectée par la sonde de température (19) devient une température prédéterminée.

2. Appareil de traitement de matériau en bande selon la revendication 1, dans lequel
les buses de soufflage d'air chaud (18) sont alignées dans une direction de transport du matériau en bande.

3. Appareil de traitement de matériau en bande selon la revendication 1 ou 2, dans lequel
les buses de soufflage d'air chaud (18) sont composées de conduits segmentés obtenus en segmentant le conduit de circulation dans la direction de la largeur du matériau en bande dans la partie en aval du réchauffeur, et
le régulateur de débit d'air (21) ajuste un degré d'ouverture d'un registre (16) prévu pour chacun des conduits segmentés.

4. Appareil de traitement de matériau en bande selon l'une quelconque des revendications 1 à 3, dans lequel
les buses de soufflage d'air chaud (18) maintiennent le matériau en bande par une pression de vent en soufflant de l'air chaud sur les deux surfaces du matériau en bande.
